# EUROPÄISCHE PATENTSCHRIFT

(11) **EP 3 704 429 B1**
(45) Veröffentlichungstag und Bekanntmachung des Hinweises auf die Patenterteilung: **03.04.2024**
(21) Anmeldenummer: 18803860.8
(22) Anmeldetag: 30.10.2018
(51) Int. Cl.: F26B 15/14, B05B 13/02, B62D 65/18, F26B 25/10, B05B 12/18

(54) **BEHANDLUNGSANLAGE UND VERFAHREN ZUM BEHANDELN VON WERKSTÜCKEN**
TREATMENT SYSTEM AND METHOD FOR TREATING WORKPIECES
INSTALLATION DE TRAITEMENT ET PROCÉDÉ DE TRAITEMENT DE PIÈCES

(30) Priorität: 03.11.2017 DE 102017219590
(43) Veröffentlichungstag der Anmeldung: 09.09.2020
(73) Patentinhaber: Dürr Systems AG, 74321 Bietigheim-Bissingen (DE)
(72) Erfinder: IGLAUER, Oliver, 70469 Stuttgart (DE); LAUER, Michael, 74321 Bietigheim-Bissingen (DE); STRAUBE, Roland, 70794 Filderstadt (DE)
(74) Vertreter: DTS Patent- und Rechtsanwälte Schnekenbühl und Partner mbB
(86) Internationale Anmeldenummer: PCT/DE2018/100886
(87) Internationale Veröffentlichungsnummer: WO 2019/086078

(56) Entgegenhaltungen:
- DE-A1-102009 054 404
- DE-A1-102010 024 840
- DE-A1-102015 006 098
- JP-A- H08 266 982
- JP-U- S6 394 551
- JP-U- H04 118 168
- US-A- 5 014 625
- US-A- 6 062 850

## Beschreibung

Die vorliegende Erfindung betrifft eine Behandlungsanlage sowie ein Verfahren zum Behandeln von Werkstücken. Hierbei ist insbesondere vorgesehen, dass beispielsweise als Fahrzeugkarosserien ausgebildete Werkstücke vorbehandelt, beschichtet und/oder getrocknet werden.

Die DE 10 2015 006 098 A1 offenbart eine Trocknungsanlage für Fahrzeugkarosserien, bei welcher eine räumliche und thermische Trennung der Fahrzeugkarosserien einerseits und des Transportsystems zur Förderung der Fahrzeugkarosserien andererseits vorgesehen ist.

Die DE 10 2009 054 404 A1, die JP H04-118168 U und die US 6 062 850 A offenbaren verschiedene Varianten von Fördersystemen zur Förderung von Werkstücken.

Eine Behandlungsanlage sowie ein Verfahren nach dem Oberbegriff des Anspruchs 1 bzw. des Anspruchs 9 sind aus der JP 08-266982 A bekannt.

Der vorliegenden Erfindung liegt die Aufgabe zugrunde, eine Behandlungsanlage bereitzustellen, welche einfach aufgebaut ist und eine effiziente Abdichtung des Behandlungsraums ermöglicht, insbesondere zur Vermeidung von Leckagen des Behandlungsraums.

Diese Aufgabe wird erfindungsgemäß durch eine Behandlungsanlage gemäß Anspruch 1 gelöst.

Die Führungsvorrichtung ist erfindungsgemäß in einem von einer Einhausung der Fördervorrichtung umgebenen Führungsraum angeordnet.

Die Behandlungsanlage umfasst ferner eine Gaszuführung zur Zuführung von Gas zu dem Führungsraum.

Der Behandlungsraum ist insbesondere ein Trocknertunnel, durch welchen insbesondere als Fahrzeugkarosserien ausgebildete Werkstücke nach einem Beschichtungsvorgang hindurch gefördert werden.

Innerhalb des Behandlungsraums wird insbesondere von einer Beschichtung der Werkstücke Lösemittel freigesetzt. Unter gewissen Rahmenbedingungen kann es vorkommen, dass sich das Lösemittel als Kondensat innerhalb oder auch nach einem Austritt desselben außerhalb des Behandlungsraums niederschlägt. Eine solche Kondensatbildung ist vorzugsweise zu vermeiden.

Insbesondere dann, wenn eine Fördervorrichtung teilweise innerhalb und teilweise außerhalb des Behandlungsraums angeordnet ist, kann im Bereich einer Öffnung in einer den Behandlungsraum umgebenden Wandung eine Leckage unvermeidlich sein. Somit kann insbesondere Lösemittel aus dem Behandlungsraum nach außen gelangen oder aber sich im Falle von ungünstigen Temperaturverteilungen auch innerhalb des Behandlungsraums als Kondensat ablagern.

Dadurch, dass die Führungsvorrichtung gemäß der vorliegenden Erfindung von einer Einhausung umgeben ist und zudem mittels einer Gaszuführung Gas in den von der Einhausung umgebenen Führungsraum einleitbar ist, kann vorzugsweise eine bevorzugte Strömung durch die Öffnung in der den Behandlungsraum umgebenden Wandung eingestellt werden, wobei insbesondere vorgesehen ist, dass das Gas aus dem Führungsraum in den Behandlungsraum strömt. Eine Leckage von Lösemittel kann hierdurch vorzugsweise wirksam verhindert werden. Insbesondere kann hierdurch eine effiziente Abdichtung des Behandlungsraums gewährleistet werden.

Die Öffnung ist vorzugsweise ein sich längs einer Förderrichtung der Fördervorrichtung erstreckender Förderschlitz in einer Wandung, insbesondere in einer Bodenwandung, des Behandlungsraums.

Vorteilhaft kann es sein, wenn der Führungsraum über die Öffnung mit dem Behandlungsraum in Fluidverbindung steht, wobei mittels der Gaszuführung in dem Führungsraum ein Druck erzeugbar ist, welcher höher ist, als ein Druck im Behandlungsraum. Das dem Führungsraum zugeführte Gas strömt somit vorzugsweise stets aus dem Führungsraum in den Behandlungsraum. Eine Rückströmung wird hierdurch vorzugsweise wirksam verhindert.

Die Öffnung, insbesondere ein Förderschlitz, wird oder ist vorzugsweise partiell abgedeckt und/oder abgedichtet. Hierfür können insbesondere eine Schuppendichtung, eine mechanische Lamellendichtung, ein lokaler Abschirmkragen und/oder einen Fluidvorhang bildende Düsen, insbesondere auf der dem Behandlungsraum zugewandten Seite der Öffnung, vorgesehen sein.

Erfindungsgemäß ist ferner vorgesehen, dass die Fördervorrichtung eine oder mehrere Schleusen umfasst, durch welche Förderelemente, insbesondere Fahrwagen, der Fördervorrichtung in den Führungsraum hineinfahrbar oder aus dem Führungsraum herausfahrbar sind.

Die eine oder die mehreren Schleusen sind insbesondere an einem oder mehreren Endbereichen des Behandlungsraums angeordnet und begrenzen den Führungsraum vorzugsweise längs einer Förderrichtung der Fördervorrichtung.

In der einen oder den mehreren Schleusen wird vorzugsweise ebenfalls Gas zugeführt, insbesondere mit einem im Vergleich zum Führungsraum und/oder Behandlungsraum erhöhtem Druck, um ein unerwünschtes Ausströmen von Gas aus dem Führungsraum und/oder dem Behandlungsraum in eine Umgebung der Behandlungsanlage zu vermeiden oder zumindest zu reduzieren.

Die eine oder die mehreren Schleusen der Fördervorrichtung sind vorzugsweise zugleich eine oder mehrere Schleusen des Behandlungsraums oder aber hiervon verschiedene Schleusen.

Günstig kann es sein, wenn die Gaszuführung eine Konditioniervorrichtung zum Erhitzen, Kühlen, Entfeuchten und/oder Befeuchten eines dem Führungsraum zuzuführenden Gasstroms umfasst.

Die Konditioniervorrichtung kann insbesondere eine Heizvorrichtung, eine Kühlvorrichtung, einen Entfeuchter und/oder einen Befeuchter umfassen.

Günstig kann es sein, wenn die Konditioniervorrichtung einen oder mehrere Wärmeübertrager umfasst, mittels welchen insbesondere Wärme von einer Abluft der Behandlungsanlage, einem in der Behandlungsanlage geführten Prozessmedium und/oder einer separaten Wärmequelle auf einen dem Führungsraum zuzuführenden Gasstrom übertragbar ist.

Die Wärmeübertragung erfolgt dabei vorzugsweise ohne Medienkontakt.

Insbesondere ist der Wärmeübertrager ein Gas-Gas-Wärmetauscher oder ein Flüssigkeit-Gas-Wärmetauscher.

Das dem Führungsraum zugeführte Gas kann insbesondere Frischluft sein, welche mittels eines Frischluftwärmeübertragers vor der Zuführung zu dem Führungsraum erwärmt wird.

Der Frischluftwärmeübertrager dient insbesondere der Beheizung von Frischluft, welche dem Behandlungsraum zugeführt wird, insbesondere über die Schleusen eines als Trocknertunnel ausgebildeten Behandlungsraums.

Die dem Führungsraum zugeführte Frischluft kann insbesondere aus einem Gesamtfrischluftstrom abgezweigt sein.

Ferner kann vorgesehen sein, dass die gesamte dem Behandlungsraum zugeführte Frischluft ausschließlich über den Führungsraum und durch die Öffnung hindurch in den Behandlungsraum eingeleitet wird.

Es kann jedoch auch vorgesehen sein, dass das dem Führungsraum zuzuführende Gas unabhängig von einer Konditioniervorrichtung zum Konditionieren der Frischluft konditioniert, insbesondere temperiert, wird. Hierzu kann insbesondere ein Reingaswärmeübertrager, eine Heizvorrichtung mit einer Brennkammer oder ähnliches vorgesehen sein.

Insbesondere dann, wenn Frischluft über den Führungsraum in den Behandlungsraum eingeleitet werden soll, kann eine Temperierung der Frischluft zumindest teilweise auch innerhalb des Führungsraums erfolgen, da die Einhausung und die Fördervorrichtung sich im Betrieb der Behandlungsanlage insgesamt erhitzen und somit auch Wärme auf den dem Führungsraum zugeführten Gasstrom übertragen wird.

Ein separater Druckkanal zur Zuführung von Frischluft zu dem Behandlungsraum ist vorzugsweise entbehrlich, wenn die für den Behandlungsraum benötigte Frischluft vollständig über den Führungsraum zugeführt wird.

Es kann dann allenfalls noch zusätzlich eine Frischluftzufuhr über die Schleusen in den Behandlungsraum vorgesehen sein.

Der Führungsraum ist insbesondere gegenüber einer Umgebung der Behandlungsanlage abgedichtet. Beispielsweise sind im Bereich einer Einfahrtsschleuse und/oder Ausfahrtsschleuse ein Einfahrtstor bzw. ein Ausfahrtstor vorgesehen. Hierdurch kann eine erhöhte Druckdifferenz zwischen dem Druck im Führungsraum einerseits und dem Druck im Behandlungsraum sowie in der Umgebung andererseits realisiert werden.

Günstig kann es sein, wenn die Gaszuführung fluidwirksam mit einem oder mehreren von dem Behandlungsraum verschiedenen weiteren Räumen der Behandlungsanlage verbunden ist.

Insbesondere ist eine Verbindung derart vorgesehen, dass Gas aus diesem einen oder diesen mehreren Räumen zu dem Führungsraum zuführbar ist.

Es kann vorgesehen sein, dass der Behandlungsraum ein Trocknungsraum ist und dass die Gaszuführung fluidwirksam mit einem oder mehreren weiteren Trocknungsräumen der Behandlungsanlage, einem oder mehreren Beschichtungsräumen der Behandlungsanlage und/oder einem oder mehreren Kontrollräumen der Behandlungsanlage verbunden ist.

Ein Trocknungsraum ist insbesondere ein Raum eines Vortrockners, eines Haupttrockners oder auch ein anderer Bereich oder Abschnitt eines als Trocknertunnel ausgebildeten Behandlungsraums.

Insbesondere ist ein Abschnitt eines Trocknungsraums eine Heizzone, eine Haltezone oder eine Kühlzone.

Ein Beschichtungsraum ist insbesondere ein Raum, in welchem die Werkstücke vorbehandelt oder lackiert, insbesondere mit Füller, Basislack, Decklack und/oder Klarlack beschichtet, werden.

Ein Kontrollraum ist insbesondere ein Raum, in welchem eine applizierte und ausgehärtete Beschichtung kontrolliert und/oder nachbehandelt und/oder nachgebessert wird.

Zwischen den Aufnahmeelementen und der Öffnung sind vorzugsweise ein oder mehrere Spalte gebildet. Durch diesen einen oder diese mehreren Spalte strömt vorzugsweise das Gas aus dem Führungsraum in den Behandlungsraum.

Es kann vorgesehen sein, dass ein oder mehrere Spalte jeweils eine oder mehrere Strömungsumlenkungen aufweisen. Insbesondere sind ein oder mehrere labyrinthartige Spalte vorgesehen, wodurch sich insbesondere eine reduzierte Strömungsgeschwindigkeit und/oder eine längere Aufenthaltszeit des Gases im jeweiligen Spalt ergeben kann. Insbesondere kann hierdurch eine Vorwärmung des dem Behandlungsraum zuzuführenden Gases, insbesondere der Frischluft, erzielt werden.

Der vorliegenden Erfindung liegt ferner die Aufgabe zugrunde, ein Verfahren zum Behandeln von Werkstücken bereitzustellen, welches einfach durchführbar ist und eine sichere Abdichtung des Behandlungsraums gewährleistet.

Diese Aufgabe wird erfindungsgemäß durch das Verfahren gemäß dem unabhängigen Verfahrensanspruch gelöst.

Erfindungsgemäß ist ferner Folgendes vorgesehen: Zuführen von Gas zu einem Führungsraum, welcher von einer Einhausung der Fördervorrichtung umgeben ist und in welchem die Führungsvorrichtung angeordnet ist.

Das erfindungsgemäße Verfahren weist vorzugsweise einzelne oder mehrere der im Zusammenhang mit der erfindungsgemäßen Behandlungsanlage beschriebenen Merkmale und/oder Vorteile auf.

Günstig kann es sein, wenn das dem Führungsraum zugeführte Gas Abluft aus einem anderen Behandlungsraum oder Behandlungsbereich der Behandlungsanlage ist.

Es kann vorgesehen sein, dass Gas konditioniert wird, bevor es dem Führungsraum zugeführt wird. Insbesondere kann als Konditionierung eine Vorwärmung oder Vorheizung vorgesehen sein.

Eine Temperatur des dem Führungsraum zugeführten Gases beträgt vorzugsweise mindestens ungefähr 50 °C, beispielsweise mindestens ungefähr 70 °C, und/oder höchstens ungefähr 100 °C, beispielsweise höchstens ungefähr 90 °C, vorzugsweise höchstens ungefähr 80 °C.

Durch die Zuführung des Gases wird vorzugsweise ein Druck in dem Führungsraum erzeugt, welcher mindestens ungefähr 50 Pa, vorzugsweise mindestens ungefähr 200 Pa, beispielsweise mindestens ungefähr 500 Pa, höher ist als ein Druck im Behandlungsraum.

Das dem Führungsraum zugeführte Gas strömt vorzugsweise durch die Öffnung und wird dabei vorzugsweise erwärmt, insbesondere durch direkten Kontakt mit der im Betrieb der Behandlungsanlage aufgeheizten Wandung des Behandlungsraums und/oder mit den im Betrieb der Behandlungsanlage aufgeheizten Aufnahmeelementen.

Vorteilhaft kann es sein, wenn ein oder mehrere Aufnahmeelemente und/oder ein oder mehrere Förderelemente, beispielsweise ein oder mehrere Fahrwagen, teilweise oder vollständig thermisch isoliert sind, insbesondere gegenüber dem im Führungsraum geführten Gas.

Insbesondere sind ein oder mehrere, vorzugsweise sämtliche, elektrische und/oder elektronische Komponenten der Fördervorrichtung, beispielsweise der Förderelemente oder Fahrwagen, gegenüber dem im Führungsraum geführten Gas thermisch isoliert.

Die Führungsvorrichtung umfasst insbesondere eine Führungsschiene.

Insbesondere ist die Fördervorrichtung ein sogenannter Monorailförderer.

Die Öffnung in der Wandung des Behandlungsraums ist vorzugsweise in denjenigen Bereichen abgedeckt, in welchen zumindest temporär kein Aufnahmeelement durch die Öffnung hindurch ragt.

Der Führungsraum ist insbesondere ein Druckraum, welcher einen Zwischenbereich zwischen einer Umgebung der Behandlungsanlage und dem Behandlungsraum bildet, insbesondere zur optimierten Abdichtung des Behandlungsraums.

In dem Führungsraum wird vorzugsweise eine lösemittelfreie Atmosphäre aufrechterhalten, insbesondere durch Zuführung von Frischluft über die Gaszuführung. Die sensiblen elektrischen und mechanischen Komponenten der Führungsvorrichtung, insbesondere von Fahrwagen der Führungsvorrichtung, können hierdurch zuverlässig vor möglichen Beschädigungen durch Lösemittelkondensat geschützt werden.

Zudem bildet der Führungsraum vorzugsweise eine Zwischenstufe zwischen einer Umgebung der Behandlungsanlage und dem Behandlungsraum, wodurch sich ebenfalls eine Kondensatgefahr reduzieren lässt.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Querschnitt durch eine Behandlungsanlage;
- Fig. 2: eine vergrößerte Darstellung des Bereichs II in Fig. 1;
- Fig. 3: eine der Fig. 2 entsprechende Darstellung einer alternativen Ausführungsform einer Behandlungsanlage.

Gleiche oder funktional äquivalente Elemente sind in sämtlichen Figuren mit denselben Bezugszeichen versehen.

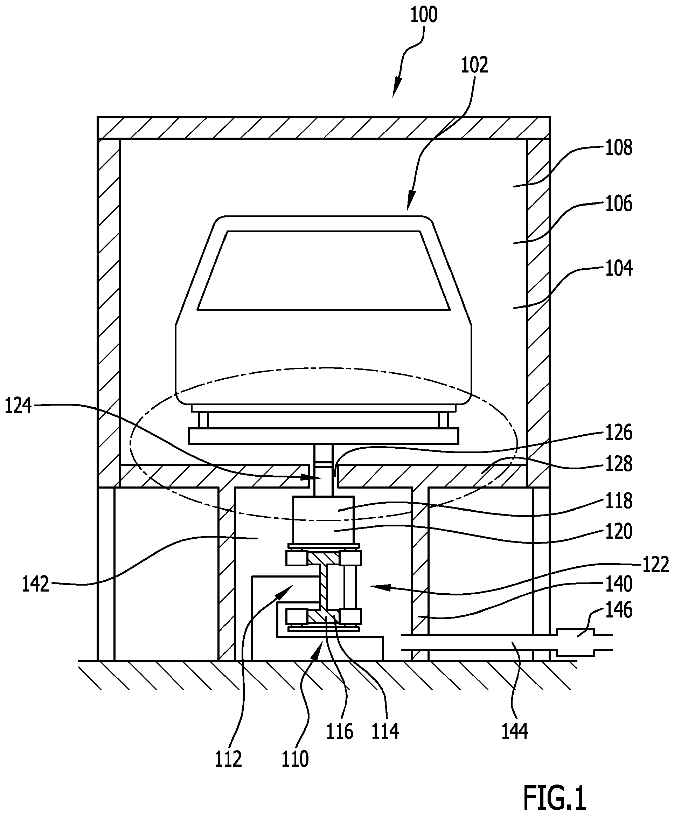

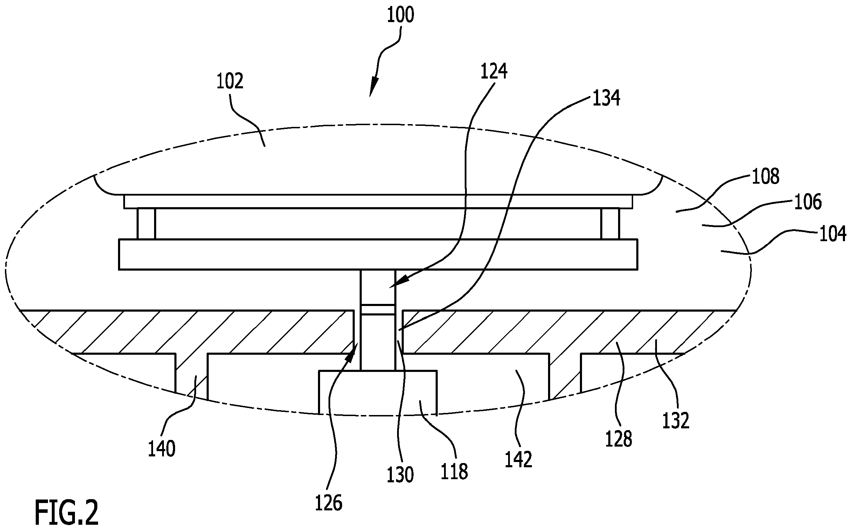

Eine in den Fig. 1 und 2 dargestellte Ausführungsform einer als Ganzes mit 100 bezeichneten Behandlungsanlage zur Behandlung von Werkstücken 102 ist insbesondere eine Trocknungsanlage zum Trocknen von beschichteten Fahrzeugkarosserien.

Die Behandlungsanlage 100 umfasst einen Behandlungsraum 104, welcher insbesondere ein Trocknungsraum 106, beispielsweise ein Trocknertunnel 108, ist.

Ferner umfasst die Behandlungsanlage 100 eine Fördervorrichtung 110, mittels welcher die Werkstücke 102 durch den Behandlungsraum 104 hindurch förderbar sind.

Die Fördervorrichtung 110 ist beispielsweise als ein Monorailförderer 112 ausgebildet.

Vorzugsweise umfasst die Fördervorrichtung 110 eine Führungsvorrichtung 114, welche insbesondere als eine Führungsschiene 116 ausgebildet ist und an welcher eine oder mehrere Förderelemente 118, insbesondere Fahrwagen 120, längs einer Förderrichtung verfahrbar angeordnet sind.

Insbesondere bei als Fahrwagen 120 ausgebildeten Förderelementen 118 kann vorgesehen sein, dass jedem Fahrwagen 120 eine separate Antriebsvorrichtung 122, insbesondere ein Antriebsmotor, zugeordnet ist. Die Fahrwagen 120 sind somit unabhängig voneinander längs der Führungsvorrichtung 114 verfahrbar.

Zur Aufnahme der Werkstücke 102 sind insbesondere Aufnahmeelemente 124 vorgesehen.

Insbesondere sind die Aufnahmeelemente 124 Bestandteil der Förderelemente 118 oder an den Förderelementen 118 festgelegt.

Bei der in den Fig. 1 und 2 dargestellten Ausführungsform der Behandlungsanlage 100 ist ein Teil der Fördervorrichtung 110 innerhalb des Behandlungsraums 104 angeordnet, während ein weiterer Teil der Fördervorrichtung 110 außerhalb des Behandlungsraums 104 angeordnet ist.

Insbesondere sind die Führungsvorrichtung 114 und die Antriebsvorrichtungen 122 der Fahrwagen 120 außerhalb des Behandlungsraums 104 angeordnet.

Die Aufnahmeelemente 124 erstrecken sich vorzugsweise durch eine Öffnung 126 in einer Wandung 128, welche den Behandlungsraum 104 umgibt, hindurch und bilden somit eine Verbindung zwischen dem außerhalb des Behandlungsraums 104 angeordneten Teil der Fördervorrichtung 110 einerseits und den innerhalb des Behandlungsraums 104 angeordneten Werkstücken 102 andererseits.

Die Öffnung 126 ist insbesondere ein Förderschlitz 130, welcher sich parallel zur Führungsvorrichtung 114 längs der Förderrichtung erstreckt.

Insbesondere ist die Öffnung 126 in einer Bodenwandung 132 ausgebildet, welche den Behandlungsraum 104 bezüglich der Schwerkraftrichtung nach unten hin abschließt.

Unterhalb der Bodenwandung 132 sind insbesondere die Führungsvorrichtung 114 und die Antriebsvorrichtungen 122 der Fahrwagen 120 angeordnet.

Wie insbesondere Fig. 2 zu entnehmen ist, ergibt sich zwischen dem Aufnahmeelement 124 und der Wandung 128 ein Spalt 134, welcher eine fluidwirksame Verbindung zwischen dem Behandlungsraum 104 einerseits und dem Bereich außerhalb des Behandlungsraums 104 andererseits bildet.

Im Betrieb der Behandlungsanlage 100 kann somit beispielsweise Lösemittel, welches bei der Trocknung der Werkstücke 102 an die im Behandlungsraum 104 enthaltene Luft abgegeben wird, aus dem Behandlungsraum 104 entweichen.

Aufgrund der Tatsache, dass die Komponenten der Behandlungsanlage 100 stark unterschiedliche Temperaturen aufweisen können, kann entweichendes Lösemittel zu einer Kondensatbildung führen, was letztlich insbesondere eine Beschädigung der Fördervorrichtung 110 zur Folge haben kann. Zudem kann sich durch entweichendes Lösemittel auch eine Gesundheitsgefährdung der Arbeiter ergeben.

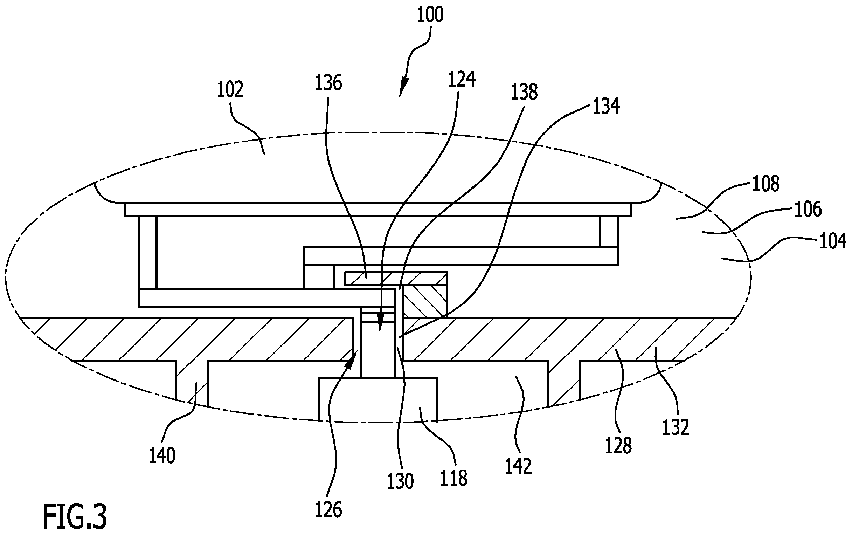

Wie insbesondere Fig. 3 zu entnehmen ist, kann ein Austritt von Lösemittel im Bereich der Öffnung 126 reduziert werden, indem beispielsweise mittels einer Abdeckung 136 die Öffnung 126 zumindest teilweise abgedeckt wird oder zumindest ein Durchströmen der Öffnung 126 erschwert wird.

Auch durch eine oder mehrere Strömungsumlenkungen 138 im Bereich des Spalts 134 kann sich eine reduzierte Leckagewirkung ergeben.

Vollständig vermieden werden kann die Leckage im Bereich der Öffnung 126 jedoch vorzugsweise dadurch, dass eine bevorzugte Strömungsrichtung im Bereich der Öffnung 126 gewährleistet wird, nämlich die Durchströmung der Öffnung 126 von außerhalb des Behandlungsraums 104 in den Behandlungsraum 104 hinein.

Die Behandlungsanlage 100 umfasst hierzu vorzugsweise eine Einhausung 140, welche die Führungsvorrichtung 114 der Fördervorrichtung 110 umgibt und somit einen beispielsweise unterhalb des Behandlungsraums 104 angeordneten Führungsraum 142 bildet.

Der Führungsraum 142 erstreckt sich im Wesentlichen parallel zum Behandlungsraum 104 längs der Förderrichtung und ist durch die Wandung 128, insbesondere die Bodenwandung 132, des Behandlungsraums 104 von demselben getrennt.

Über die Öffnung 126 ergibt sich jedoch eine fluidwirksame Verbindung zwischen dem Behandlungsraum 104 und dem Führungsraum 142.

Mittels der Einhausung 140 ist somit ein Zwischenbereich zwischen dem Behandlungsraum 104 und einer Umgebung der Behandlungsanlage 100 gebildet.

Die Behandlungsanlage 100 umfasst ferner eine Gaszuführung 144, mittels welcher ein Gas, insbesondere Frischluft, in den Führungsraum 142, d.h. in den Innenraum der Einhausung 140, einleitbar ist.

Innerhalb des Führungsraums 142 kann somit eine lösemittelfreie Atmosphäre gewährleistet werden, welche zudem vorzugsweise einen im Vergleich zu dem Druck im Behandlungsraum 104 erhöhten Druck aufweist.

Im Bereich der Öffnung 126 ergibt sich somit zwingend eine kontinuierliche Gasströmung ausgehend von dem Führungsraum 142 in den Behandlungsraum 104 hinein.

Insbesondere dann, wenn als mittels der Gaszuführung 144 zugeführtes Gas Frischluft gewählt wird, kann somit dem Behandlungsraum 104 durch die Öffnung 126 hindurch Frischluft zugeführt werden.

Mittels einer Konditioniervorrichtung 146 der Gaszuführung 144 kann das dem Führungsraum 142 zuzuführende Gas zudem konditioniert, beispielsweise erhitzt, werden. Hierdurch kann insbesondere vermieden werden, dass Lösemittel im Behandlungsraum 104 kondensiert, wenn zu kaltes Gas, insbesondere zu kalte Frischluft, durch die Öffnung 126 in den Behandlungsraum 104 einströmt.

Mittels der Konditioniervorrichtung 146 wird das dem Führungsraum 142 zugeführte Gas jedoch vorzugsweise lediglich soweit erwärmt, dass die Komponenten der Fördervorrichtung 110, insbesondere temperatursensible Komponenten wie Elektromotoren, etc., unbeschädigt bleiben. Insbesondere kann eine Höchsttemperatur von ungefähr 80 °C im Führungsraum 142 vorgesehen sein.

Im Betrieb der Behandlungsanlage 100 erwärmt sich die den Behandlungsraum 104 umgebende Wandung 128.

Beim Durchströmen der Öffnung 126 wird somit auch Wärme von der Wandung 128 auf das aus dem Führungsraum 142 heraus und in den Behandlungsraum 104 hinein strömende Gas übertragen.

Insbesondere bei geeigneter Ausgestaltung des Spalts 134 kann die Wärmeübertragung optimiert werden. Beispielsweise kann der Spalt 134 durch die Verwendung einer oder mehrerer Strömungsumlenkungen 138 labyrinthartig ausgebildet werden. Hierdurch ergibt sich eine optimierte Trennung zwischen dem Behandlungsraum 104 und dem Führungsraum 142, insbesondere zur Ermöglichung einer erhöhten Druckdifferenz zwischen den beiden Räumen 104, 142. Zudem kann die Aufenthaltszeit des aus dem Führungsraum 142 heraus und in den Behandlungsraum 104 hinein strömenden Gases, insbesondere der Frischluft, erhöht werden, um eine Wärmeübertragung von der Wandung 128 auf das Gas, insbesondere die Frischluft, zu optimieren.

Bei weiteren (nicht dargestellten) Ausführungsformen von Behandlungsanlagen 100 können insbesondere unterschiedliche Varianten von Fördervorrichtungen 110 vorgesehen sein. Beispielsweise kann eine Hängefördervorrichtung vorgesehen sein. Die Öffnung 126 ist dann insbesondere in einer der Bodenwandung 132 gegenüberliegenden Deckenwandung ausgebildet. Die Führungsvorrichtung 114 sowie die Einhausung 140 und der hiervon umgebene Führungsraum 142 sind dann vorzugsweise über dem Behandlungsraum 104 angeordnet.

In funktionaler Hinsicht ergeben sich dabei vorzugsweise dieselben Vorteile. Insbesondere kann auch bei einer solchen Ausgestaltung vorzugsweise eine Leckage von Lösemittel minimiert oder vollständig vermieden werden.

## Patentansprüche

1. Behandlungsanlage (100) zur Behandlung von Werkstücken (102), insbesondere zum Trocknen von Fahrzeugkarosserien, umfassend:
- einen Behandlungsraum (100) zur Aufnahme der zu behandelnden Werkstücke (102);
- eine Fördervorrichtung (110), mittels welcher die zu behandelnden Werkstücke (102) durch den Behandlungsraum (104) hindurch förderbar sind,
wobei die Fördervorrichtung (110) eine Führungsvorrichtung (114) umfasst, welche außerhalb des Behandlungsraums (104) angeordnet ist,
wobei die Fördervorrichtung (110) mehrere Aufnahmeelemente (124) zur Aufnahme der Werkstücke (102) umfasst,
wobei die Aufnahmeelemente (124) bewegbar an der Führungsvorrichtung (114) angeordnet sind und sich durch eine Öffnung (126) in einer den Behandlungsraum (100) umgebenden Wandung (128) in den Behandlungsraum (104) hinein erstrecken,
wobei die Führungsvorrichtung (114) in einem von einer Einhausung (140) der Fördervorrichtung (110) umgebenen Führungsraum (142) angeordnet ist, und wobei
die Behandlungsanlage (100) eine Gaszuführung (144) zur Zuführung von Gas zu dem Führungsraum (142) umfasst,
**dadurch gekennzeichnet, dass**
die Fördervorrichtung (110) eine oder mehrere Schleusen umfasst, durch welche Förderelemente (118), insbesondere Fahrwagen (120), der Fördervorrichtung (110) in den Führungsraum (142) hineinfahrbar oder aus dem Führungsraum (142) herausfahrbar sind.

2. Behandlungsanlage (100) nach Anspruch 1, **dadurch gekennzeichnet, dass** die Öffnung (126) ein sich längs einer Förderrichtung der Fördervorrichtung (110) erstreckender Förderschlitz (130) in einer Wandung (128), insbesondere in einer Bodenwandung (132), des Behandlungs-raums (104) ist.

3. Behandlungsanlage (100) nach einem der Ansprüche 1 oder 2, **dadurch gekennzeichnet, dass** der Führungsraum (142) über die Öffnung (126) mit dem Behandlungsraum (104) in Fluidverbindung steht, wobei mittels der Gaszuführung (144) in dem Führungsraum (142) ein Druck erzeugbar ist, welcher höher ist als ein Druck im Behandlungsraum (104).

4. Behandlungsanlage (100) nach einem der Ansprüche 1 bis 3, **dadurch gekennzeichnet, dass** die Gaszuführung (144) eine Konditioniervorrichtung (146) zum Erhitzen, Kühlen, Entfeuchten und/oder Befeuchten eines dem Führungsraum (142) zuzuführenden Gasstroms umfasst.

5. Behandlungsanlage (100) nach Anspruch 4, **dadurch gekennzeichnet, dass** die Konditioniervorrichtung (146) einen oder mehrere Wärmeübertrager umfasst, mittels welchen Wärme von
a) einer Abluft der Behandlungsanlage (100);
b) einem in der Behandlungsanlage (100) geführten Prozessmedium; und/oder
c) einer separaten Wärmequelle
auf einen dem Führungsraum (142) zuzuführenden Gasstrom übertragbar ist.

6. Behandlungsanlage (100) nach einem der Ansprüche 1 bis 5, **dadurch gekennzeichnet, dass** die Gaszuführung (144) fluidwirksam mit einem oder mehreren von dem Behandlungsraum (104) verschiedenen weiteren Räumen der Behandlungsanlage (100) verbunden ist.

7. Behandlungsanlage (100) nach Anspruch 6, **dadurch gekennzeichnet, dass** der Behandlungsraum (104) ein Trocknungsraum (106) ist und dass die Gaszuführung (144) fluidwirksam mit
a) einem oder mehreren weiteren Trocknungsräumen (106) der Behandlungsanlage (100),
b) einem oder mehreren Beschichtungsräumen der Behandlungsanlage (100) und/oder
c) einem oder mehreren Kontrollräumen der Behandlungsanlage (100) verbunden ist.

8. Behandlungsanlage (100) nach einem der Ansprüche 1 bis 7, **dadurch gekennzeichnet, dass** zwischen den Aufnahmeelementen (124) und der Öffnung (126) ein oder mehrere Spalte (134) gebildet sind, welche jeweils eine oder mehrere Strömungsumlenkungen (138) aufweisen.

9. Verfahren zum Behandeln von Werkstücken (102), umfassend:
Hindurchführen von Werkstücken (102) durch einen Behandlungsraum (104) mittels einer Fördervorrichtung (110), wobei die Fördervorrichtung (110) eine außerhalb des Behandlungsraums (104) angeordnete Führungsvorrichtung (114) umfasst,
wobei die Werkstücke (102) mittels mehrerer Aufnahmeelemente (124) aufgenommen sind, welche bewegbar an der Führungsvorrichtung (114) angeordnet sind und sich durch eine Öffnung (126) in einer den Behandlungsraum (104) umgebenden Wandung (128) in den Behandlungsraum (104) hineinerstrecken, und
wobei
Gas zu einem Führungsraum (142) zugeführt wird, welcher von einer Einhausung (140) der Fördervorrichtung (110) umgeben ist und in welchem die Führungsvorrichtung (114) angeordnet ist,
**dadurch gekennzeichnet, dass**
Förderelemente (118), insbesondere Fahrwagen (120), der Fördervorrichtung (110) durch eine oder mehrere Schleusen der Fördervorrichtung (110) in den Führungsraum (142) hingefahren oder aus dem Führungsraum (142) herausgefahren werden.

10. Verfahren nach Anspruch 9, **dadurch gekennzeichnet, dass**
a) das dem Führungsraum (142) zugeführte Gas Abluft aus einem anderen Raum oder Bereich der Behandlungsanlage (100) ist; und/oder
b) das Gas konditioniert wird, bevor es dem Führungsraum (142) zugeführt wird.

11. Verfahren nach Anspruch 10, **dadurch gekennzeichnet, dass** eine Temperatur des dem Führungsraum (142) zugeführten Gases höchstens ungefähr 100 °C, insbesondere höchstens ungefähr 90 °C, vorzugsweise höchstens ungefähr 80 °C, beträgt.

12. Verfahren nach einem der Ansprüche 9 bis 11, **dadurch gekennzeichnet, dass** durch die Zuführung des Gases ein Druck in dem Führungsraum (142) erzeugt wird, welcher mindestens ungefähr 50 Pa, insbesondere mindestens ungefähr 200 Pa, vorzugsweise mindestens ungefähr 500 Pa, höher ist als ein Druck in dem Behandlungsraum (104).

13. Verfahren nach einem der Ansprüche 9 bis 12, **dadurch gekennzeichnet, dass** das dem Führungsraum (142) zugeführte Gas durch die Öffnung (126) hindurchströmt und dabei erwärmt wird.

## Claims

1. Treatment system (100) for treating workpieces (102), in particular for drying vehicle bodies, comprising:
- a treatment chamber (100) for receiving the workpieces (102) to be treated;
- a conveying device (110), by means of which the workpieces (102) to be treated can be conveyed through the treatment chamber (104),
the conveying device (110) comprising a guiding device (114) which is arranged outside the treatment chamber (104),
the conveying device (110) comprising a plurality of receiving elements (124) for receiving the workpieces (102),
the receiving elements (124) being movably arranged on the guiding device (114) and extending into the treatment chamber (104) through an opening (126) in a wall (128) which surrounds the treatment chamber (100),
the guiding device (114) being arranged in a guiding space (142) surrounded by an enclosure (140) of the conveying device (110), and
the treatment system (100) comprising a gas supply (144) for supplying gas to the guiding space (142),
**characterized in that** the conveying device (110) comprises one or more airlocks, through which conveying elements (118), in particular carriages (120), of the conveying device (110) can be moved into the guiding space (142) or can be moved out of the guiding space (142).

2. Treatment system (100) according to claim 1, **characterized in that** the opening (126) is a conveying slot (130) which extends along a conveying direction of the conveying device (110) in a wall (128), in particular in a bottom wall (132), of the treatment chamber (104).

3. Treatment system (100) according to either claim 1 or claim 2,
**characterized in that** the guiding space (142) is fluidically connected to the treatment chamber (104) via the opening (126), wherein a pressure can be generated in the guiding space (142) by means of the gas supply (144), which pressure is higher than a pressure in the treatment chamber (104).

4. Treatment system (100) according to any of claims 1 to 3, **characterized in that** the gas supply (144) comprises a conditioning device (146) for heating, cooling, dehumidifying, and/or moistening a gas stream to be supplied to the guiding space (142).

5. Treatment system (100) according to claim 4, **characterized in that** the conditioning device (146) comprises one or more heat exchangers by means of which heat from
a) exhaust air from the treatment system (100);
b) a process medium guided in the treatment system (100); and/or
c) separate heat source
can be transferred to a gas stream to be supplied to the guiding space (142).

6. Treatment system (100) according to any of claims 1 to 5, **characterized in that** the gas supply (144) is fluidly connected to one or more further spaces of the treatment system (100) which are different to the treatment chamber (104).

7. Treatment system (100) according to claim 6, **characterized in that** the treatment chamber (104) is a drying chamber (106) **and in that** the gas supply (144) is fluidically connected to
a) one or more further drying chambers (106) of the treatment system (100),
b) one or more coating chambers of the treatment system (100); and/or
c) one or more control chambers of the treatment system (100).

8. Treatment system (100) according to any of claims 1 to 7, **characterized in that** one or more gaps (134) are formed between the receiving elements (124) and the opening (126), which gaps each have one or more flow deflections (138).

9. Method for treating workpieces (102), comprising:
guiding workpieces (102) through a treatment chamber (104) by means of a conveying device (110), the conveying device (110) comprising a guiding device (114) arranged outside the treatment chamber (104),
the workpieces (102) being received by means of a plurality of receiving elements (124) which are movably arranged on the guiding device (114) and extend into the treatment chamber (104) through an opening (126) in a wall (128) which surrounds the treatment chamber (104), and
gas being supplied to a guiding space (142) which is surrounded by an enclosure (140) of the conveying device (110) and in which the guiding device (114) is arranged,
**characterized in that** conveying elements (118), in particular carriages (120), of the conveying device (110) are moved into the guiding space (142) or moved out of the guiding space (142) through one or more airlocks of the conveying device (110).

10. Method according to claim 9, **characterized in that**
a) the gas supplied to the guiding space (142) is exhaust air from another space or region of the treatment system (100); and/or
b) the gas is conditioned before it is supplied to the guiding space (142).

11. Method according to claim 10, **characterized in that** a temperature of the gas supplied to the guiding space (142) is at most approximately 100°C, in particular at most approximately 90°C, preferably at most approximately 80°C.

12. Method according to any of claims 9 to 11, **characterized in that** a pressure is generated in the guiding space (142) by supplying the gas, which pressure is at least approximately 50 Pa, in particular at least approximately 200 Pa, preferably at least approximately 500 Pa greater than a pressure in the treatment chamber (104).

13. Method according to any of claims 9 to 12, **characterized in that** the gas supplied to the guiding space (142) flows through the opening (126) and is thereby heated.

## Revendications

1. Installation de traitement (100) permettant le traitement de pièces (102), en particulier le séchage de carrosseries de véhicule, comprenant :
- un espace de traitement (100) permettant la réception des pièces (102) à traiter ;
- un dispositif de transport (110), au moyen duquel les pièces (102) à traiter peuvent être transportées à travers l'espace de traitement (104),
dans laquelle le dispositif de transport (110) comprend un dispositif de guidage (114) qui est disposé à l'extérieur de l'espace de traitement (104),
dans laquelle le dispositif de transport (110) comprend plusieurs éléments de réception (124) permettant la réception des pièces (102),
dans laquelle les éléments de réception (124) sont disposés de manière mobile sur le dispositif de guidage (114) et s'étendent dans l'espace de traitement (104) à travers une ouverture (126) dans une paroi (128) entourant l'espace de traitement (100),
dans laquelle le dispositif de guidage (114) est disposé dans un espace de guidage (142) entouré par un boîtier (140) du dispositif de transport (110), et
dans laquelle l'installation de traitement (100) comprend une amenée de gaz (144) permettant d'amener du gaz à l'espace de guidage (142),
**caractérisée en ce que** le dispositif de transport (110) comprend un ou plusieurs sas à travers lesquels des éléments de transport (118), en particulier des chariots (120), du dispositif de transport (110) peuvent être introduits dans l'espace de guidage (142) ou sortis de l'espace de guidage (142).

2. Installation de traitement (100) selon la revendication 1, **caractérisée en ce que** l'ouverture (126) est une fente de transport (130) s'étendant le long d'une direction de transport du dispositif de transport (110) dans une paroi (128), en particulier dans une paroi de fond (132), de l'espace de traitement (104).

3. Installation de traitement (100) selon l'une des revendications 1 ou 2, **caractérisée en ce que** l'espace de guidage (142) est en liaison fluidique avec l'espace de traitement (104) par l'intermédiaire de l'ouverture (126), dans laquelle une pression, laquelle est supérieure à une pression dans l'espace de traitement (104), peut être générée dans l'espace de guidage (142) au moyen de l'amenée de gaz (144).

4. Installation de traitement (100) selon l'une des revendications 1 à 3, **caractérisée en ce que** l'amenée de gaz (144) comprend un dispositif de conditionnement (146) permettant de chauffer, refroidir, déshumidifier et/ou humidifier un écoulement de gaz à amener à l'espace de guidage (142).

5. Installation de traitement (100) selon la revendication 4, **caractérisée en ce que** le dispositif de conditionnement (146) comprend un ou plusieurs échangeurs de chaleur, au moyen desquels de la chaleur peut être transférée
a) d'un air évacué de l'installation de traitement (100) ;
b) d'un milieu de processus guidé dans l'installation de traitement (100) ; et/ou
c) d'une source de chaleur séparée
à un écoulement de gaz à amener à l'espace de guidage (142).

6. Installation de traitement (100) selon l'une des revendications 1 à 5, **caractérisée en ce que** l'amenée de gaz (144) est reliée de manière fluidique à un ou plusieurs autres espaces de l'installation de traitement (100) différents de l'espace de traitement (104).

7. Installation de traitement (100) selon la revendication 6, **caractérisée en ce que** l'espace de traitement (104) est un espace de séchage (106) **et que** l'amenée de gaz (144) est reliée de manière fluidique à
a) un ou plusieurs autres espaces de séchage (106) de l'installation de traitement (100),
b) un ou plusieurs espaces de revêtement de l'installation de traitement (100) et/ou
c) un ou plusieurs espaces de vérification de l'installation de traitement (100).

8. Installation de traitement (100) selon l'une des revendications 1 à 7, **caractérisée en ce qu'**un ou plusieurs interstices (134) sont formés entre les éléments de réception (124) et l'ouverture (126), lesquels interstices présentent respectivement un ou plusieurs moyens de déviation d'écoulement (138).

9. Procédé permettant le traitement de pièces (102), comprenant :
le passage de pièces (102) à travers un espace de traitement (104) au moyen d'un dispositif de transport (110), dans lequel le dispositif de transport (110) comprend un dispositif de guidage (114) disposé à l'extérieur de l'espace de traitement (104),
dans lequel les pièces (102) sont reçues au moyen de plusieurs éléments de réception (124), lesquels sont disposés de manière mobile sur le dispositif de guidage (114) et s'étendent dans l'espace de traitement (104) à travers une ouverture (126) dans une paroi (128) entourant l'espace de traitement (104), et
dans lequel du gaz est amené à un espace de guidage (142) qui est entouré par un boîtier (140) du dispositif de transport (110) et dans lequel est disposé le dispositif de guidage (114),
**caractérisé en ce que** des éléments de transport (118), en particulier des chariots (120), du dispositif de transport (110) sont introduits dans l'espace de guidage (142) ou sont sortis de l'espace de guidage (142) à travers un ou plusieurs sas du dispositif de transport (110).

10. Procédé selon la revendication 9, **caractérisé en ce que**
a) le gaz amené à l'espace de guidage (142) est de l'air évacué d'un autre espace ou d'une autre zone de l'installation de traitement (100) ; et/ou
b) le gaz est conditionné avant d'être amené à l'espace de guidage (142).

11. Procédé selon la revendication 10, **caractérisé en ce qu'**une température du gaz amené à l'espace de guidage (142) est au maximum d'environ 100 °C, en particulier au maximum d'environ 90 °C, de préférence au maximum d'environ 80 °C.

12. Procédé selon l'une des revendications 9 à 11, **caractérisé en ce que** l'amenée du gaz génère une pression dans l'espace de guidage (142) qui est supérieure d'au moins 50 Pa environ, en particulier d'au moins 200 Pa environ, de préférence d'au moins 500 Pa environ, à une pression dans l'espace de traitement (104).

13. Procédé selon l'une des revendications 9 à 12, **caractérisé en ce que** le gaz amené à l'espace de guidage (142) s'écoule à travers l'ouverture (126) et est ainsi réchauffé.
